# EUROPEAN PATENT APPLICATION

(11) **EP 1 779 910 A1**
(43) Date of publication of application: **02.05.2007**
(21) Application number: 04798220.2
(22) Date of filing: 04.11.2004
(51) Int. Cl.: A63H 33/38

(54) **BOOK COMPRISING A THREE-DIMENSIONAL ELEMENT**

(30) Priority: 07.04.2004 ES 200400890 U
(71) Applicant: Bunamir, S.L., 08007 Barcelona (ES)
(72) Inventor: BEASCOA AMAT, Santiago José, E-08007 Barcelona (ES)
(74) Representative: Manresa Val, Manuel
(86) International application number: PCT/ES2004/000493
(87) International publication number: WO 2005/099852

(57) **Abstract**

The invention relates to a book comprising a three-dimensional element. The inventive book comprises ordered pages (1) having a determined content (3), which are connected at one of the sides thereof by the spine of the book or publication (4). The invention is **characterised in that** a hole or cavity (5) is provided in at least one part of the book or publication and comprises fixing means (6) for positioning at least one inflatable element (7) in the hole or cavity, said element being related to the contents (3) of the book or publication.

## Description

This invention consists of a book or publication with a 3-D motif, of the type comprising various pages, arranged in an orderly fashion and with a certain content, joined on one side thereof by the spine of the book or publication, which is characterised in that in at least part of the book or publication an opening or cavity has been formed that comprises some attachment means for positioning, in said opening or cavity, at least one inflatable motif, relating to the content of the book or publication.

### BACKGROUNDS OF THE INVENTION

There are various books on the market that include motifs to make it easier to understand and comprehend the book to which they are attached.

In this way, Spanish Utility Model No. 131856, in the name of Mr. José Luis Gutiérrez Díez is known, from 1967, relating to a didactic-educational device for children, which is characterised by the arrangement, that may or not form part of a book, of one or several sheets containing complete graphic illustrations, but without any details or parts, as well as the arrangement of other sheets which, in the same case, have a series of figures-transfers on a transparent surface that can be transferred on to the figure in the afore-mentioned illustration by covering those spaces that are considered the most suitable according to the subject or representation, whereby the cover sheet can position the figure on the whole first so that its effect can be observed, before rubbing the back so that the figure in question is transferred to the illustration sheet by means of paraffin-covered paper that protects said figures on the support sheet.

Also European Patent No. 0832674, from 1997, is known, and its equivalent US registration (US 5.681.199), in the name of READERS DIGEST CHILDREN'S PUBLISHING, INC., which relates to a book in which one or more covers or pages are bound using a binding method that is adapted to receive a tube and a play figure which extends in a removable fashion inside the tube. The play figure has a top part and a hook element. An activity device is also supplied with the book. The activity device is activated so that the play figure is extended within the tube, using the bottom part of the play figure. A musical device could be provided inside the tube to produce a sound for a certain length of time after the activity device has been activated.

### BRIEF DESCRIPTION OF THE INVENTION

This invention is the result of research conducted by the inventor in the field of education and bibliography, in an attempt to combine in one and the same book or publication, and also in a permanently visible fashion, various elements that are essential for understanding said book or publication.

Everybody will admit that when reading a history or geography book or publication, for example, it is very useful to have a globe nearby so as to identify the country or continent in question that is referenced in said text.

It is also known that, on occasions, when reading a book or publication on anatomy, it is necessary to have an anatomy manual or atlas nearby so as to identify each part of the body as per the contents in the volume being read.

The inventor considers the case in which said globe, atlas or manual is not available at that moment, and so the actual book or publication must provide said information, either at the end of the book or publication, or by means of an appendix.

Both solutions are awkward, as they distract from reading, and if we consider this occurring with younger readers, a small distraction can lead to a lack of concentration on reading and the excuse or reason given for stopping to read the book or publication at that moment.

Therefore the inventor has developed a new book or publication that solves the afore-mentioned problems, as it is the actual book or publication that contains said globe, atlas or graphical element in a way that it is permanently visible, and therefore it is not necessary to stop concentrating on the book or publication, as the information the reader may require is on view at all times.

Furthermore, children can consider this to be an entertaining toy, with the book or publication therefore becoming much more interesting to read, as without realising it, children are receiving information visually from said inflatable motif.

An object of this invention is a book or publication with a 3-D motif, of the type comprising various pages, arranged in an orderly fashion and with a certain content, joined on one side thereof by the spine of the book or publication, which is characterised in that in at least part of the book or publication an opening or cavity has been formed, comprising attachment means for positioning, in said opening or cavity, at least one inflatable motif, relating to the contents of the book or publication.

Said inflatable element can be removable and therefore, after being used, it can be kept in a box or container suitably sized to fit in the opening or cavity in the book or publication, and in this way the book or publication is completely uniform and said box or container does not protrude from it.

The simplicity and adaptability of this book or publication, as well as its versatility, together with the visual effect it has on the reader, exploit this invention to the full.

Moreover in the same book it is possible to place means for lighting to allow the lighting of the inflatable motif.

In addition, it is possible to configure the book with activating means (for example a small motor with batteries) that can allow the rotation of the motif.

### BRIEF DESCRIPTION OF THE DRAWINGS

Two sheets of drawings are attached to this specification to facilitate the explanation thereof, which illustrate a practical embodiment that is referenced merely as a non-limiting example of the scope of the invention, in which:
- Figure 1 is a general view of the object of this invention, and
- Figure 2 is a view of the book or publication closed with the box or container housing the inflatable motif.
- Figure 3 is a view of the book or publication with the box or container out of the book.

### CONCRETE EMBODIMENT OF THE APPLICATION

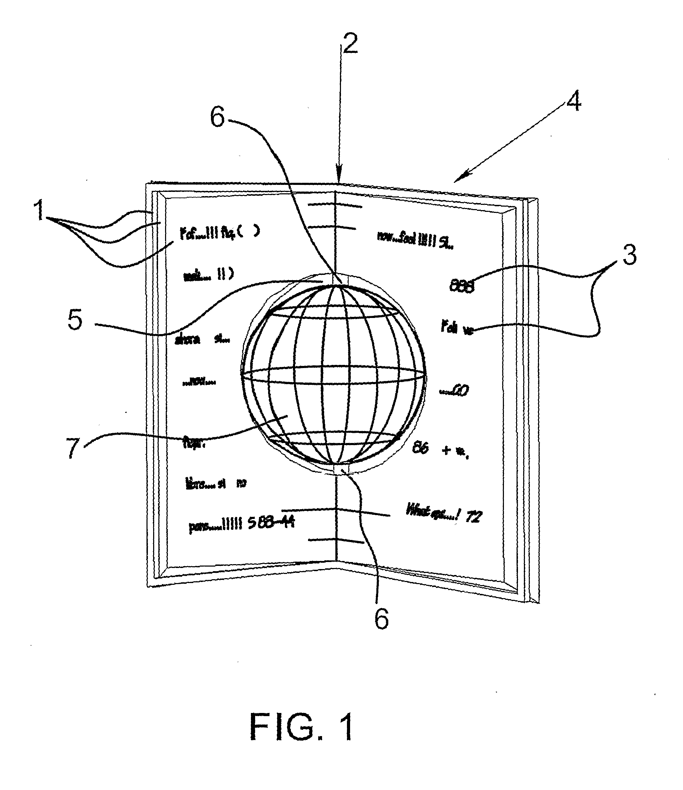

Figure 1 shows a book or publication 4, with various pages 1, the spine 2 of the book or publication, the contents 3 of the book or publication, an opening or cavity 5, an inflatable motif 7 and some attachment means 6.

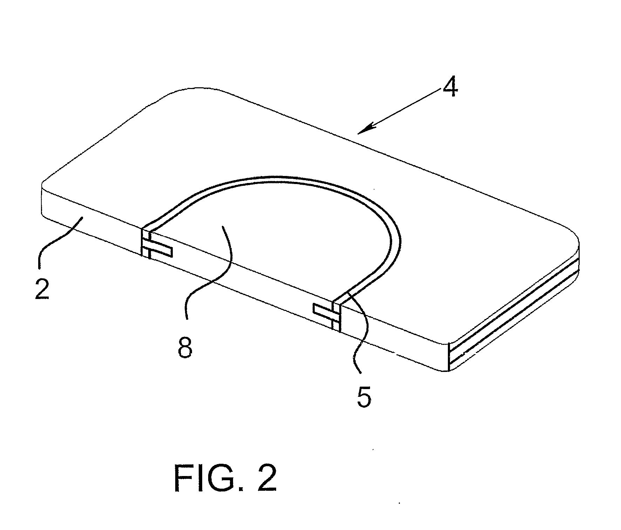

Figure 2 shows said book or publication 4, the spine 2 of the book or publication, the opening or cavity 5 and a box or container 8.

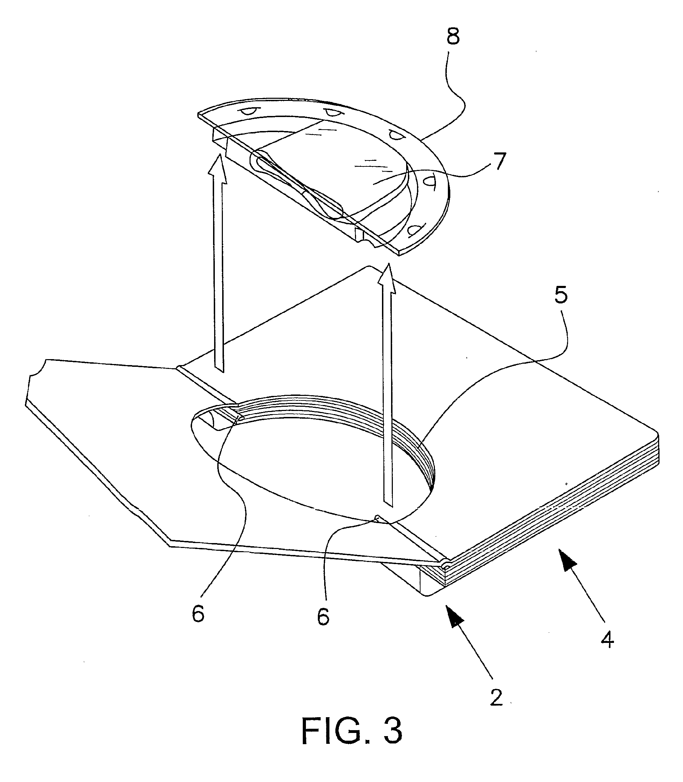

Figure 3 shows the book or publication 4, the spine 2, the opening or cavity 5, attachment means 6, the box or container 8 and the inflatable motif 7

The opening or cavity 5, in this particular embodiment, has been arranged transversally with respect to the spine 2 of the book or publication.

In this embodiment example said inflatable motif 7 is removable, although it can be designed to be non-removable according to requirements.

Said opening or cavity 5 is semicircular when the book or publication 4 is closed (see Figure 2), with the diameter of the semicircle lying on the extension of the spine 2 of the book or publication.

Therefore in a particular embodiment, the reader opens the book or publication 4 on various pages 1 with a certain content 3 relating to the inflatable motif 7 (see Figure 1), which, in this particular embodiment, is in the centre of the book or publication, although it could be in any other part of the book or publication and perform its function perfectly.

In this way, supposing that it is a geography book or publication, if the reader does not know the location of a certain country or continent, the reader only needs to look for it on the inflatable and rotational motif 7, which would be a globe, and which is always visible from any page, so that the reader can continue concentrating on reading the book or publication 4. Said motif could include (not shown in the drawings) activating means (for example a small motor with batteries) for rotating the ball, as well as means for lighting that illuminate the inflatable motif.

Once the reader has finished reading the book or publication 4, they only have to release the inflatable motif 7 from the attachment means 6, in this embodiment, oppositely arranged lugs, deflate the inflatable motif 7, using some inflating/deflating means that are not shown, and place it inside the box or container 8 so that subsequently it can be incorporated inside the book or publication, positioning said inflatable motif 7. The box or container 8 is suitably sized to fit in the opening or cavity 5 formed in the book or publication.

In the event the reader starts to read again, they need only separate the box or container 8 from the book or publication 4, open said box or container 8, inflate the inflatable motif 7 using the inflating/deflating means, place it in the lugs 7, and open the book or publication on the page 1 where they stopped reading.

The essence of this invention would not be altered if the said book or publication were to have two or more openings with respective attachment means and inflatable motifs, since including more than one inflatable motif in every book or publication only depends on the size of the book or publication and the inflatable motif.

This invention describes a new book or publication with a 3-D motif. The examples mentioned herein do not limit this invention, and therefore it is susceptible to various applications and/or adaptations, all within the scope of the following claims.

## Claims

1. Book or publication with 3-D motif, of the type comprising various pages (1), arranged in an orderly fashion and with a certain content (3), joined on one side thereof by the spine (2) of the book or publication (4), **characterised in that** in at least part of the book or publication an opening or cavity (5) has been formed, which includes some attachment means (6) for positioning, in said opening or cavity, at least one inflatable motif (7), relating to the contents (3) of the book or publication.

2. Book or publication according to claim 1, **characterised in that** said inflatable motif (7) is removable.

3. Book or publication according to claim 1 or 2, **characterised in that** the opening or cavity (5) is transversal with respect to the spine (2) of the book or publication.

4. Book or publication according to claim 2 or 3, **characterised in that** said attachment means (6) are a pair of oppositely arranged lugs.

5. Book or publication according to claim 3 or 4, **characterised in that** said opening or cavity (5) is semicircular when the book or publication (4) is closed, with the diameter of the semicircle lying on the extension of the spine (2) of the book or publication.

6. Book or publication according to claim 4 or 5, **characterised in that** it has two openings with their respective attachment means and inflatable motifs.

7. Book or publication according to claim 4 or 5, **characterised in that** the inflatable motif (7), once deflated, is contained in a box or container (8), suitably sized to fit in the opening or cavity (5) of the book or publication, of which there is at least one.

8. - Book or publication according to one of the preceding claims, **characterised in that** the inflatable motif (7) is rotational.

9. - Book according to claim 8 **characterized in that** it includes means for activating the rotational movement of the inflatable motif (7).

10. - Book according to one of the previous claims **characterized in that** in addition it includes means for lighting that illuminate the inflatable motif (7).
